# EUROPÄISCHE PATENTSCHRIFT

(11) **EP 2 870 034 B1**
(45) Veröffentlichungstag und Bekanntmachung des Hinweises auf die Patenterteilung: **13.07.2016**
(21) Anmeldenummer: 13723787.1
(22) Anmeldetag: 17.05.2013
(51) Int. Cl.: B60R 16/03, H02J 7/14, G01S 15/93, G01S 7/52, G01S 7/524, B60R 21/017

(54) **ERHÖHUNG DER VERFÜGBARKEIT ULTRASCHALLBASIERTER FAHRERASSISTENZSYSTEME BEI AUFTRETEN VON UNTERSPANNUNG IM FAHRZEUG**
INCREASING THE AVAILABILITY OF ULTRASOUND-BASED DRIVER ASSISTANCE SYSTEMS IN THE EVENT OF UNDERVOLTAGE IN THE VEHICLE
AUGMENTATION DE LA DISPONIBILITÉ DE SYSTÈMES D'AIDE À LA CONDUITE À BASE D'ULTRASONS EN CAS D'APPARITION D'UNE SOUS-TENSION DANS LE VÉHICULE

(30) Priorität: 04.07.2012 DE 102012211630
(43) Veröffentlichungstag der Anmeldung: 13.05.2015
(73) Patentinhaber: Robert Bosch GmbH, 70442 Stuttgart (DE)
(72) Erfinder: KLOTZ, Albrecht, 71229 Leonberg (DE); HERING, Michael, 71229 Leonberg (DE); RAPPS, Peter, 76227 Karlsruhe (DE)
(86) Internationale Anmeldenummer: PCT/EP2013/060314
(87) Internationale Veröffentlichungsnummer: WO 2014/005756

(56) Entgegenhaltungen:
- EP-A1- 1 921 463
- DE-A1- 19 829 150
- JP-A- 2006 101 997
- US-A1- 2001 043 090
- US-A1- 2010 245 066

## Beschreibung

Die Erfindung betrifft ein Fahrerassistenzsystem eines Fahrzeuges mit zumindest einem Ultraschallsensor zur Ermittlung des Abstandes des Fahrzeuges zu einem Hindernis, wobei der Sensor durch ein Bordnetz des Fahrzeuges mit elektrischer Energie versorgt wird.

Ferner betrifft die Erfindung ein Verfahren zum Betrieb eines Fahrerassistenzsystem eines Fahrzeuges mit zumindest einem Ultraschallsensor zur Ermittlung des Abstandes des Fahrzeuges zu einem Hindernis, wobei der Sensor durch ein Bordnetz des Fahrzeuges mit elektrischer Energie versorgt wird.

### Stand der Technik

In Fahrerassistenzsystemen verwendete Ultraschallsensoren zur Ermittlung des Abstandes des Fahrzeuges zu einem Hindernis arbeiten mit dem Impuls-Echo-Prinzip zur Abstandsmessung. Dabei wird zunächst ein Ultraschallpuls durch den Ultraschallsensor generiert und anschließend die Laufzeit des Schallpulses bis zu einem Hindernis und des Echos zurück zum Sensor ermittelt. Durch eine Laufzeitauswertung kann eine Berechnung des Abstandes zum Hindernis durchgeführt werden. Während der Generierung eines Ultraschallpulses hat der Ultraschallsensor eine sehr hohe Leistungsaufnahme. Während der Ultraschall-Empfangsphasen ist die Leistungsaufnahme des Sensors dagegen sehr gering. Die Versorgung des Ultraschallsensors mit elektrischer Energie erfolgt durch das Bordnetz des Fahrzeugs.

Beim Auftreten einer plötzlichen Unterspannung im Bordnetz des Fahrzeugs, beispielsweise ausgelöst durch eine Start-Stopp-Automatik, sind zwei grundsätzliche Strategien von Fahrerassistenzsystemen und Reaktionen des Ultraschallsensors bekannt:
In einer ersten Variante erfolgt keine Reaktion des Sensors auf das Auftreten einer Unterspannung im Bordnetz des Fahrzeugs. In der Folge führt die hohe Leistungs- und Stromaufnahme zu einem starken Spannungsabfall am Sensor. In Folge der zu geringen verbleibenden Versorgungsspannung am Ultraschallsensor erfolgt ein Rücksetzen des Sensors. Aufgrund dessen wird die Ultraschallabstandsmessung unterbrochen. Alle Funktionen des Fahrerassistenzsystems, die auf der Abstandsmessung und den Ultraschalldaten basieren, bekommen keinerlei Abstandsinformation mehr. Dies führt zu einer starken Degradation des Systems.

Bei einer zweiten bekannten Strategie erfolgt bei Auftreten einer Unterspannung im Bordnetz des Fahrzeugs ein Vollständiges Unterbinden der Sendepulsgenerierung durch den Ultraschallsensor nach Detektion einer Unterspannung durch den Sensor. Infolgedessen wird durch den nicht generierten Ultraschallpuls die Ultraschallabstandsmessung korrumpiert, da keine Signalechos mehr erfasst werden können und eine Berechnung des Abstandes des Fahrzeugs zu einem Hindernis nicht mehr erfolgen kann. All jene Funktionen des Fahrerassistenzsystems, die auf Basis der Abstandsmessung und der Ultraschalldaten arbeiten, bekommen keine Abstandsinformation mehr. Dies führt zu somit ebenfalls zu einer starken Degradation des Systems.

Aus der DE 198 29 150 A1 ist ein Verfahren zur Steuerung der Energieverteilung in einem Kraftfahrzeug bekannt, wobei eine hierarchische Steuerstruktur eingesetzt wird, welche übergeordnete und untergeordnete Komponenten unterscheidet. Dabei wird die Verbraucherleistung für eine bestimmte untergeordnete Komponente nur dann bereitgestellt, wenn die übergeordneten Komponenten bereits versorgt sind. Ferner werden die untergeordneten Komponenten abgeschaltet, wenn die übergeordneten Komponenten einen Leistungsbedarf aufweisen. Nachteilig dabei ist es, dass bei Auftreten einer Unterspannung der hierarchisch untergeordnete Ultraschallsensor vollständig abgeschaltet wird und daher keine Abstandsinformationen mehr liefern kann. Auch diese Vorgehensweise führt dazu, dass sämtliche Funktionen des Fahrerassistenzsystems, die auf Basis der Abstandsmessung und der Ultraschalldaten arbeiten, keine Abstandsinformation mehr bekommen, verbunden mit der Folge einer starken Degradation des Systems

Die Aufgabe der Erfindung ist es daher, ein Fahrerassistenzsystem und ein Verfahren zum Betrieb eines Fahrerassistenzsystems eines Fahrzeuges mit zumindest einem Ultraschallsensor zur Ermittlung des Abstandes des Fahrzeuges zu einem Hindernis derart weiterzubilden, dass die Verfügbarkeit ultraschallbasierter Fahrerassistenzsysteme bei Auftreten einer Unterspannung im Bordnetz des Fahrzeugs erhöht wird.

Diese Aufgabe wird erfindungsgemäß durch ein Fahrerassistenzsystem gemäß Anspruch 1 und ein Verfahren zum Betrieb eines Fahrerassistenzsystems gemäß Anspruch 6 gelöst. Vorteilhafte Weiterbildungen der Erfindung sind in den Unteransprüchen angegeben.

### Offenbarung der Erfindung

Erfindungsgemäß ist bei dem Fahrerassistenzsystem eines Fahrzeuges mit zumindest einem Ultraschallsensor zur Ermittlung des Abstandes des Fahrzeuges zu einem Hindernis, wobei der Sensor durch ein Bordnetz des Fahrzeuges mit elektrischer Energie versorgt wird, vorgesehen, dass das System einen Unterspannungsdetektor aufweist und derart eingerichtet ist, dass bei Auftreten einer Unterspannung im Bordnetz der Leistungsbedarf des Ultraschallsensors reduziert wird.

Der Kern der Erfindung ist somit die Detektion einer Unterspannung im Bordnetz des Fahrzeuges und eine Reduktion des Leistungsbedarfs des Ultraschallsensors, wodurch ein Betrieb des Fahrerassistenzsystems grundsätzlich aufrechterhalten werden kann, ohne dass ein zu hoher Spannungsabfall am Ultraschallsensor durch das Generieren eines Ultraschallpulses zu einer Überlastung des Bordnetzes mit der Gefahr des Ausfalls weiterer Komponenten führt. Die grundsätzliche Verfügbarkeit des Fahrerassistenzsystems zur Ermittlung des Abstandes des Fahrzeuges zu einem Hindernis bleibt somit grundsätzlich aufrechterhalten.

Bestandteil des Fahrerassistenzsystems kann ferner ein Steuergerät zur Ansteuerung des Sensors und zur Laufzeitauswertung des Ultraschallsignales sowie zur Berechnung des Abstandes des Fahrzeuges zum Hindernis sein. Mit dem Begriff des Sensors ist umfasst die Sensoranordnung mit Sender-Empfänger und dem Piezokeramikschwinger in dem Ultraschallsensor, der sowohl als Sender entsprechend einem Lautsprecher, als auch als Empfänger entsprechend einem Mikrofon betrieben werden kann. Ferner befindet sich die Elektronik zur Ansteuerung und Signalverarbeitung auf einer kleinen Leiterplatte innerhalb des Sensors. Mit dem Begriff des Sensors ist jeweils der Ultraschallsensor, mittels dessen die Ermittlung des Abstandes des Fahrzeuges zu einem Hindernis erfolgt, gemeint, d.h. dass die Begriffe Sensor und Ultraschallsensor im Sinne der Erfindung synonym benutzt werden.

Nach einem Aspekt der Erfindung erfolgt die Reduktion des Leistungsbedarfs des Sensors durch eine Reduzierung des Schalldrucks bei einem Sendepuls des Ultraschallsensors. Durch eine Verringerung des Ultraschallschalldrucks nach einer Detektion einer Unterspannung im Bordnetz des Fahrzeuges sinkt der Stromverbrauch und damit die Leistungsaufnahme des Sensors. Dadurch wird der Spannungsabfall am Sensor signifikant geringer. Der Sensor arbeitet auch bei geringeren Versorgungsspannungen, allerdings verbunden mit einem geringerem Schalldruck. Der verringerte Schalldruck führt gegebenenfalls zu einer verringerten Reichweite und maximalen Messreichweite des Ultraschallsensors zur Ermittlung des Abstandes des Fahrzeuges zu einem Hindernis. Es wird jedoch die grundsätzliche Funktion des Fahrerassistenzsystems, wenn auch mit einer geringeren Reichweite, aufrechterhalten. Sämtliche Funktionen, die auf den Daten des Ultraschallsensors basieren, bekommen somit auch im Fall eine Unterspannung im Bordnetz des Fahrzeuges noch Abstandsinformationen und können grundsätzlich weiter arbeiten. Dies bedeutet eine bessere Verfügbarkeit des Fahrerassistenzsystems auch im Fall von plötzlich auftretenden Unterspannungen im Bordnetz des Fahrzeugs.

Nach einem weiteren Aspekt der Erfindung erfolgt die Reduktion des Leistungsbedarfs des Sensors durch eine Verkürzung der Dauer des Sendepulses des Ultraschallsensors. Diese Maßnahme kann alternativ oder kumulativ zu einer Reduzierung des Schalldruckes erfolgen. Dabei erfolgt nach einer Detektion einer Unterspannung im Bordnetz des Fahrzeuges eine Reduktion der Dauer des mittels des Sensors generierten Ultraschallsendepulses. In der Folge der Reduzierung der Dauer sinkt die Energieaufnahme des Sensors zur Generierung eines Sendepulses, wodurch der Energiebedarf für die Ultraschallsendepulsgenerierung signifikant verrindert wird. Infolge dessen sinkt der Spannungsabfall am Sensor, da die notwendige Leistung verringert ist. Damit arbeitet der Sensor auch bei geringeren Versorgungsspannungen mit einer verringerten Ultraschallpulsdauer. Sämtliche Funktionen des Fahrerassistenzsystems, die auf den Ultraschalldaten basieren, erhalten somit auch bei Auftreten einer Unterspannung im Bordnetz des Kraftfahrzeuges noch Abstandsinformationen. Hierdurch kann die Funktion des Fahrerassistenzsystems auch bei Auftreten einer Unterspannung im Bordnetz des Fahrzeuges aufrechterhalten werden.

Die Maßnahmen der Verringerung des Schalldruckes sowie der Verkürzung der Ultraschallpulsdauer können alternativ oder kumulativ angewandt werden. Gegebenenfalls führt dies zu einer Verringerung der maximalen Messreichweite des Ultraschallsensors zur Ermittlung des Abstandes des Fahrzeuges zu einem Hindernis. Jedoch kann zumindest mit der geringeren maximalen Messreichweite die grundsätzliche Funktion aufrechterhalten werden, wodurch insgesamt die Funktion des Fahrerassistenzsystems aufrechterhalten werden kann.

Nach einem weiteren Aspekt der Erfindung ist ein Stützkondensator oder mehrere Stützkondensatoren zur Stabilisierung der Versorgungsspannung des Sensors angeordnet. Dabei können ein oder mehrere Stützkondensatoren in den Sensor integriert sein. Es werden somit ein oder mehrere Kondensatoren parallel zur Versorgungsspannung geschaltet, die als Spannungs- und Energiequelle zur Versorgung des Ultraschallsensors dient. Der Stützkondensator oder die Stützkondensatoren dienen als Spannungs- oder Energiequelle in Momenten hohen Leistungsbedarfs, d.h. in dem Moment, in dem eine Messanforderung an den Ultraschallsensor erfolgt und ein Ultraschallsendepuls durch den Ultraschallsensor generiert werden soll.

Neben dem Bordnetz des Fahrzeugs kann somit auch über Sützkondensatoren im Sensor selbst die Energie für den Sendepuls bereit gestellt werden. Vorzugsweise werden die Stützkondensatoren während der Empfangsphasen des Sensors aufgeladen.

Durch die Anordnung eines oder mehrerer Stützkondensatoren kann somit die Verfügbarkeit des Fahrerassistenzsystems auch bei Auftreten von Unterspannungen im Bordnetz des Fahrzeuges weiter erhöht werden. Durch die Anordnung derartiger Stützkondensatoren sinkt der durch das Bordnetz zu tragende Spannungsabfall im Sensor ab, da die notwendige Leistung in einem höheren Anteil aus den Stützkondensatoren bezogen werden kann, so dass der Sensor auch bei deutlich verringerten Versorgungsspannungen im Bordnetz des Fahrzeuges weiter betrieben werden kann.

In der Versorgungsleitung des Bordnetzes, über die der Sensor mit elektrischer Energie versorgt wird, kann vor dem Abzweig zu einem oder mehreren Stützkondensatoren, die parallel zu der Versorgungsleitung geschaltet sind, eine Diode angeordnet sein, um Rückwirkungen der Stützkondensatoren in das Bordnetz hinein zu unterbinden.

Bei dem Verfahren zum Betrieb eines Fahrerassistenzsystems eines Fahrzeuges mit zumindest einem Ultraschallsensor zur Ermittlung des Abstandes des Fahrzeuges zu einem Hindernis, wobei der Sensor durch ein Bordnetz des Fahrzeuges mit elektrischer Energie versorgt wird, ist erfindungsgemäß vorgesehen, dass mittels eines Unterspannungsdetektors die Spannung des Bordnetzes überwacht wird und bei Detektion einer Unterspannung im Bordnetz der Leistungsbedarf des Ultraschallsensors reduziert wird.

Da die im Bordnetz des Fahrzeuges verfügbare Spannung ohnehin durch die Fahrzeugelektronik permanent überwacht wird, kann die erfindungsgemäße Weiterbildung des Verfahrens zum Betrieb des Fahrerassistenzsystems des Fahrzeugs sehr leicht implementiert werden, da die Information über die im Bordnetz des Fahrzeugs vorliegende Spannung permanent verfügbar ist.

Die Reduktion des Leistungsbedarfs des Ultraschallsensors kann durch eine Reduzierung des Schalldrucks bei einem Sendepuls des Ultraschallsensors erfolgen. Alternativ oder kumulativ kann die Reduktion des Leistungsbedarfs durch eine Verkürzung der Dauer des Sendepulses des Ultraschallsensors erfolgen.

Nach einem weiteren Aspekt kann bei dem Verfahren zum Betrieb eine Fahrerassistenzsystems eines Fahrzeuges zur Ermittlung des Abstandes des Fahrzeuges zu einem Hindernis mittels zumindest einem Ultraschallsensor eine Stabilisierung der Versorgungsspannung des Sensors mittels eines oder mehrerer Stützkondensatoren, die parallel zur Versorgungsspannung des Bordnetzes geschaltet werden, erfolgen. Durch einen Rückgriff auf einen oder mehrere Stützkondensatoren kann der Spannungsabfall am Sensor, der auf das Bordnetz zurückwirkt, weiter verringert werden, wodurch die Belastung des Bordnetzes weiter verringert wird und die Verfügbarkeit des Systems signifikant steigt. Vorzugsweise erfolgt das Aufladen des Stützkondensators oder der Stützkondensatoren während der Empfangsphasen des Sensors. Hierdurch ist gewährleistet, dass zur Generierung des nächsten Sendepulses wieder eine ausreichende Spannung und Energie zur Deckung des Leistungsbedarfs zur Generierung des nächsten Sendepulses bereitsteht.

Zwei Ausführungsbeispiele der Erfindung sind in den Figuren dargestellt und werden nachfolgt erläutert. Es zeigen:
- Fig. 1: eine schematische Darstellung eines ersten Ausführungsbeispieles der Erfindung;
- Fig. 2: eine schematische Darstellung eines zweiten Ausführungsbeispieles der Erfindung.

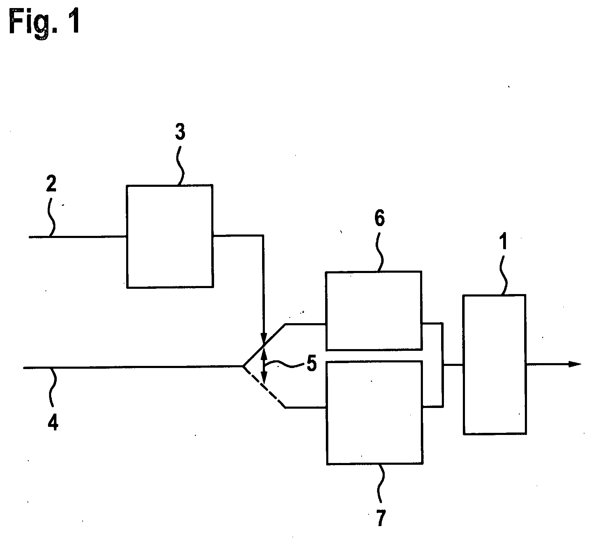

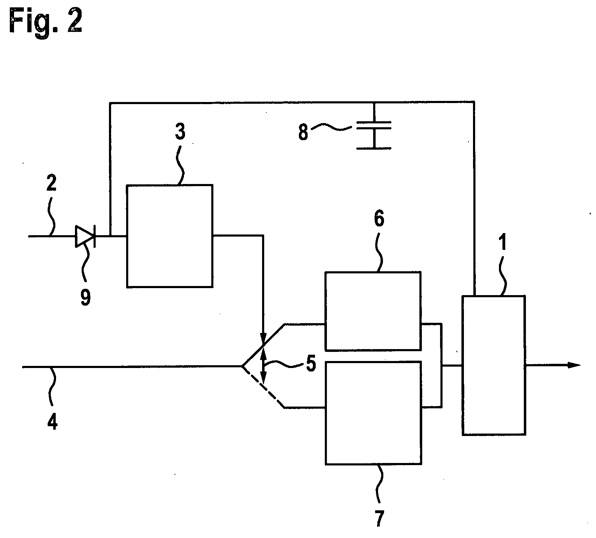

In den Fig. 1 und 2 sind identische Bauteile mit identischen Bezugszeichen versehen.

In Fig. 1 ist ein erstes Ausführungsbeispiel eines Fahrerassistenzsystems eines Fahrzeugs mit einem Ultraschallsensor zur Ermittlung des Abstandes des Fahrzeuges zu einem Hindernis dargestellt. Der elektrische Anschluss des Sensors 1 erfolgt über die Leitung 2 an das Bordnetz des Fahrzeuges, die der Spannungsversorgung dient sowie über die bidirektionale Signalleitung 4 an das nicht dargestellte Steuergerät. Über die bidirektionale Signalleitung 4 wird die Sendefunktion des Sensors 1 ausgelöst und das ausgewertete Empfangssignal vom Sensor 1 an das Steuergerät zurückgeliefert. Empfängt der Sensor 1 vom Steuergerät über die Signalleitung 4 einen digitalen Sendeimpuls, regt die elektronische Schaltung die Aluminiummembran in dem Sensor 1 mit Spannungsimpulsen in der Resonanzfrequenz zum Schwingen an und es werden Ultraschallwellen mit einer Frequenz von ca. 48 kHz ausgesendet, d.h. es wird ein Ultraschallpuls des Sensors 1 generiert.

Der vom Hindernis reflektierte Schall versetzt wiederum die inzwischen beruhigte Membran in Schwingungen, die dann als Mikrofon arbeitet. Diese werden durch eine Piezokeramik in dem Sensor 1 in ein analoges elektrisches Signal gewandelt und durch die in dem Sensor 1 integrierte Sensorelektronik verstärkt und in ein digitales Signal umgewandelt. Die Abstandsmessung mittels des Sensors 1 erfolgt durch das Echolotverfahren durch eine Auswertung der Laufzeit des Ultraschallpulses bis zu einem Hindernis und der von Hindernissen reflektierten Echoimpulse zum Sensor 1 zurück.

In die Versorgungsleitung 2 des Bordnetzes ist ein Unterspannungsdetektor 3 integriert, mittels dessen die anliegende Versorgungsspannung an der Versorgungsleitung 2 des Bordnetzes überwacht wird. Sofern mittels des Unterspannungsdetektors 3 das Auftreten einer Unterspannung, d.h. das Auftreten einer Unterschreitung eines minimalen Grenzwertes in der Versorgungsleitung 2 detektiert wird, erfolgt bei Signalanforderung über die Signalleitung 4 eine Fallunterscheidung 5.

Sofern eine ausreichende Versorgungsspannung vorliegt, führt die Fallunterscheidung 5 dazu, dass eine Sendeanforderung 6 mit voller Sendeleistung an den Sensor 1 übergeben wird. Sofern der Unterspannungsdetektor 3 eine Unterspannung in der Versorgungsleitung 2 detektiert, führt die Fallunterscheidung 5 jedoch dazu, dass ein Sendeanforderung mit reduzierter Sendeleistung 7 an den Sensor übergeben wird. Die Reduktion der Sendeleistung am Ultraschallsensor 1 kann durch eine Reduzierung des Schalldrucks und/oder durch eine Verkürzung der Dauer des Sendepulses des Ultraschallsensors 1 erfolgen.

In Fig. 2 ist ein zweites Ausführungsbeispiel der Erfindung dargestellt, wobei identische Bauteile mit identischen Bezugszeichen versehen sind. In der Versorgungsleitung 2 des Bordnetzes zur Versorgung des Sensors 1 mit elektrischer Energie ist wiederum ein Unterspannungsdetektor 3 vorgesehen. Bei Auslösung eines Messvorgangs über die Signalleitung 4 erfolgt wiederum eine Fallunterscheidung 5, ob eine Unterspannung mittels des Unterspannungsdetektors 3 in der Versorgungsleitung 2 des Bordnetzes detektiert wurde oder nicht. Dementsprechend erfolgt entweder eine Sendeanforderung mit voller Sendeleistung 6 oder aber eine Sendeanforderung mit reduzierter Sendeleistung 7 an den Sensor 1.

Ferner ist zur Versorgungsleitung 2 parallel geschaltet ein Stützkondensator 8, der als Energiequelle zur Deckung des hohen Leistungsbedarfs bei Generierung eines Sendepulses des Ultraschallsensors 1 dient. Der Stützkondensator 8 wird während der Empfangsphasen des Sensors 1 über die Versorgungsleitung 2 des Bordnetzes aufgeladen und dient der Stabilisierung der Versorgungsspannung des Sensors 1. Um Rückwirkungen des Stützkondensators 8 auf das Bordnetz über die Versorgungsleitung 2 zu unterbinden, ist eine Diode 9 in der Versorgungsleitung 2 vorgesehen.

Durch die Fallunterscheidung 5, dahingehend ob eine Unterspannung mittels des Unterspannungsdetektors 3 festgestellt wurde und eine mögliche Reduktion des Leistungsbedarfs des Sensors 1 durch eine Sendeanforderung mit reduzierter Sendeleistung 7 wird die Verfügbarkeit des Fahrerassistenzsystems auch im Fall von plötzlich auftretenden Unterspannungen im Bordnetz 2 des Fahrzeugs garantiert.

## Patentansprüche

1. Fahrerassistenzsystem eines Fahrzeuges mit zumindest einem Ultraschallsensor (1) zur Ermittlung des Abstandes des Fahrzeuges zu einem Hindernis, wobei der Ultraschallsensor (1) durch ein Bordnetz (2) des Fahrzeuges mit elektrischer Energie versorgt wird, **dadurch gekennzeichnet, dass** das System einen Unterspannungsdetektor (3) aufweist und derart eingerichtet ist, dass bei Auftreten einer Unterspannung im Bordnetz (2) der Leistungsbedarf des Ultraschallsensors (1) reduziert wird.

2. Fahrerassistenzsystem nach Anspruch 1, **dadurch gekennzeichnet, dass** die Reduktion des Leistungsbedarfs durch eine Reduzierung des Schalldrucks bei einem Sendepuls des Ultraschallsensors (1) erfolgt.

3. Fahrerassistenzsystem nach Anspruch 1 oder 2, **dadurch gekennzeichnet, dass** die Reduktion des Leistungsbedarfs durch eine Verkürzung der Dauer des Sendepulses des Ultraschallsensors (1) erfolgt.

4. Fahrerassistenzsystem nach einem der vorherigen Ansprüche, **dadurch gekennzeichnet, dass** es zumindest einen Stützkondensator (8) zur Stabilisierung der Versorgungsspannung des Ultraschallsensors (1) aufweist.

5. Fahrerassistenzsystem nach einem der vorherigen Ansprüche, **dadurch gekennzeichnet, dass** in einer Versorgungsleitung (2) des Bordnetzes, über die der Ultraschallsensor (1) mit elektrischer Energie versorgt wird, vor dem Abzweig zu einem oder mehreren Stützkondensator/en (8) eine Diode (9) angeordnet ist.

6. Verfahren zum Betrieb eines Fahrerassistenzsystem eines Fahrzeuges mit zumindest einem Ultraschallsensor (1) zur Ermittlung des Abstandes des Fahrzeuges zu einem Hindernis, wobei der Ultraschallsensor (1) durch ein Bordnetz (2) des Fahrzeuges mit elektrischer Energie versorgt wird, **dadurch gekennzeichnet, dass** mittels eines Unterspannungsdetektors (3) die Spannung des Bordnetzes (2) überwacht wird und bei Detektion einer Unterspannung im Bordnetz (2) der Leistungsbedarf des Ultraschallsensors (1) reduziert wird.

7. Verfahren nach Anspruch 6, **dadurch gekennzeichnet, dass** die Reduktion des Leistungsbedarfs durch eine Reduzierung des Schalldrucks bei einem Sendepuls des Ultraschallsensors (1) erfolgt.

8. Verfahren nach Anspruch 6 oder 7, **dadurch gekennzeichnet, dass** die Reduktion des Leistungsbedarfs durch eine Verkürzung der Dauer des Sendepulses des Ultraschallsensors (1) erfolgt.

9. Verfahren nach einem der Ansprüche 6 bis 8, **dadurch gekennzeichnet, dass** mittels zumindest eines Stützkondensators (8) eine Stabilisierung der Versorgungsspannung des Ultraschallsensors (1) erfolgt.

10. Verfahren nach Anspruch 9, **dadurch gekennzeichnet, dass** des/der Stützkondensator/en (8) während der Empfangsphasen des Ultraschallsensors (1) aufgeladen wird.

## Claims

1. Driver assistance system of a vehicle having at least one ultrasound sensor (1) for determining the distance of the vehicle from an obstacle, wherein the ultrasound sensor (1) is supplied with electrical energy by an on-board power system (2) of the vehicle, **characterized in that** the system has an undervoltage detector (3) and is configured in such a way that when an undervoltage occurs in the on-board power system (2) the power demand of the ultrasound sensor (1) is reduced.

2. Driver assistance system according to Claim 1, **characterized in that** the power demand is reduced by reducing the sound pressure in the case of a transmission pulse of the ultrasound sensor (1).

3. Driver assistance system according to Claim 1 or 2, **characterized in that** the power demand is reduced by shortening the duration of the transmission pulse of the ultrasound sensor (1).

4. Driver assistance system according to one of the preceding claims, **characterized in that** said driver assistance system has at least one decoupling capacitor (8) for stabilizing the supply voltage of the ultrasound sensor (1).

5. Driver assistance system according to one of the preceding claims, **characterized in that** a diode (9) is arranged, upstream of the branch to one or more decoupling capacitors (8), in a supply line (2) of the on-board power system, via which supply line (2) the ultrasound sensor (1) is supplied with electrical energy.

6. Method for operating a driver assistance system of a vehicle having at least one ultrasound sensor (1) for determining the distance of the vehicle from an obstacle, wherein the ultrasound sensor (1) is supplied with electrical energy by an on-board power system (2) of the vehicle, **characterized in that** the voltage of the on-board power system (2) is monitored by means of an undervoltage detector (3), and when an undervoltage is detected in the on-board power system (2), the power demand of the ultrasound sensor (1) is reduced.

7. Method according to Claim 6, **characterized in that** the power demand is reduced by reducing the sound pressure in the case of a transmission pulse of the ultrasound sensor (1).

8. Method according to Claim 6 or 7, **characterized in that** the power demand is reduced by shortening the duration of the transmission pulse of the ultrasound sensor (1).

9. Method according to one of Claims 6 to 8, **characterized in that** the supply voltage of the ultrasound sensor (1) is stabilized by means of at least one decoupling capacitor (8).

10. Method according to Claim 9, **characterized in that** the decoupling capacitor/capacitors (8) is/are charged during the reception phases of the ultrasound sensor (1).

## Revendications

1. Système d'assistance au conducteur d'un véhicule, comprenant au moins un détecteur à ultrasons (1) destiné à déterminer la distance entre le véhicule et un obstacle, le détecteur à ultrasons (1) étant alimenté en énergie électrique au travers d'un réseau de bord (2) du véhicule, **caractérisé en ce que** le système comprend un détecteur de sous-tension (3) et est conçu de telle sorte que lorsqu'une sous-tension se produit dans le réseau de bord (2), la puissance requise par le détecteur à ultrasons (1) est réduite.

2. Système d'assistance au conducteur selon la revendication 1, **caractérisé en ce que** la réduction de la puissance requise est effectuée par une réduction de la pression acoustique lors d'une impulsion émise du détecteur à ultrasons (1).

3. Système d'assistance au conducteur selon la revendication 1 ou 2, **caractérisé en ce que** la réduction de la puissance requise est effectuée par un raccourcissement de la durée de l'impulsion émise du détecteur à ultrasons (1).

4. Système d'assistance au conducteur selon l'une des revendications précédentes, **caractérisé en ce qu'**il comprend au moins un condensateur de soutien (8) destiné à stabiliser la tension d'alimentation du détecteur à ultrasons (1).

5. Système d'assistance au conducteur selon l'une des revendications précédentes, **caractérisé en ce qu'**une diode (9) est disposée dans une ligne d'alimentation (2) du réseau de bord, par le biais de laquelle le détecteur à ultrasons (1) est alimenté en énergie électrique, avant la dérivation vers un ou plusieurs condensateurs de soutien (8).

6. Procédé pour faire fonctionner un système d'assistance au conducteur d'un véhicule, comprenant au moins un détecteur à ultrasons (1) destiné à déterminer la distance entre le véhicule et un obstacle, le détecteur à ultrasons (1) étant alimenté en énergie électrique au travers d'un réseau de bord (2) du véhicule, **caractérisé en ce que** la tension du réseau de bord (2) est surveillée au moyen d'un détecteur de sous-tension (3) et la puissance requise par le détecteur à ultrasons (1) est réduite en cas de détection d'une sous-tension se produisant dans le réseau de bord (2).

7. Procédé selon la revendication 6, **caractérisé en ce que** la réduction de la puissance requise est effectuée par une réduction de la pression acoustique lors d'une impulsion émise du détecteur à ultrasons (1).

8. Procédé selon la revendication 6 ou 7, **caractérisé en ce que** la réduction de la puissance requise est effectuée par un raccourcissement de la durée de l'impulsion émise du détecteur à ultrasons (1).

9. Procédé selon l'une des revendications 6 à 8, **caractérisé en ce qu'**une stabilisation de la tension d'alimentation du détecteur à ultrasons (1) est effectuée au moyen d'au moins un condensateur de soutien (8).

10. Procédé selon la revendication 9, **caractérisé en ce que** le ou les condensateur (s) de soutien (8) est/sont chargé(s) pendant les phases de réception du détecteur à ultrasons (1).
